# EUROPEAN PATENT SPECIFICATION

(11) **EP 1 070 414 B1**
(45) Date of publication and mention of the grant of the patent: **21.12.2005**
(21) Application number: 99918412.0
(22) Date of filing: 30.03.1999
(51) Int. Cl.: H04L 29/06, H04L 9/32, G06F 1/00

(54) **IMPROVEMENTS IN, OR RELATING TO, ELECTRONIC BADGES**
VERBESSERUNG BEZÜGLICH ELEKTRONISCHER BADGES
AMELIORATIONS CONCERNANT DES BADGES ELECTRONIQUES

(30) Priority: 01.04.1998 SE 9801151
(43) Date of publication of application: 24.01.2001
(73) Proprietor: Telia AB (publ), 123 86 Farsta (SE)
(72) Inventor: GRINNEBY, Stefan, S-752 23 Uppsala (SE)
(74) Representative: Hopfgarten, Nils
(86) International application number: PCT/SE1999/000516
(87) International publication number: WO 1999/051003

(56) References cited:
- WO-A1-97/16911
- ANDREW S. TANENBAUM, Computer Networks Third edition, 1996 by Prentice-Hall Inc., Upper Saddle River, New Jersey, pages 706-709.

## Description

The present invention relates to a telecommunications system employing electronic security badges to provide temporary access to a computer system protected by firewalls according to the preamble of claim 1, a method of providing temporary, controlled, access to a secure computer system according to the preamble of claim 13 and an administration computer architecture according to the preamble of claim 27 for use with a telecommunications system employing electronic security badges.

With modem data communications technology, it is frequently desirable to give a site visitor access to a secure computer system over electronic transmission systems. For example, it may be desirable to hold a conference, or virtual meeting, in cyberspace, which is hosted on a secure computer, to which general public access is denied for security reasons. In such a meeting, it may be necessary for a visitor to run applications software on the host computer. However, the person hosting such a meeting may well wish to limit a visitor's access to a certain set of the applications available on the host computer. If access to the host computer is given to a visitor, this will, to some extent, compromise the security of the host computer, unless special steps are taken to protect the host computer.

Existing systems for providing access to computers protected by firewalls are either inflexible and difficult for a visitor to use, or ineffective in terms of preserving the security of the home computer.

The document WO 97 16911 discloses a secured gateway interface wherein an internal computer system is directed to involve authenticating a connection initiated by the internal computer system to an external computer system. The external computer system calls a transaction request received by the external computer system. In response to the request an original process environment containing process environments variables is created. A string is formed which comprises the transaction request and the process environment variables for executing the transaction request. The string is then transmitted by the external system to the internal system through the authenticated system. The original process environment is thereafter recreated by the internal system and the transaction request is executed.

Andrew S. Tanenbaum, Computer Networks, Third edition, 1966 by Prentice-Hall Inc., Upper Saddle River, New Jersey, pages 706 - 709 discloses Java- "applets" as a small application program, that is to be downloaded from the Inter net and executed in a safe way. It is not able to read or write files that the program has no authorization to.

The purpose of the present invention is to provide in an advantageous way flexible, user friendly, access to a host computer protected by firewalls without compromising security.

This purpose is obtained by a system according to claim 1, a method according to claim 13, and an administration computer according to claim 27.

Thus the present invention permits persons located behind an address translating firewall, which only allows HTTP, to obtain controlled access to privileged data information without compromising data security. The badge establishes a reliable contact from which only trustworthy instructions will emanate, i.e. the instructions will only come from an approved and security cleared visitor. The administration computer includes a control panel linked to a web server adapted to issue electronic badges. Access to said web server is controlled by a password protection means, and an electronic visitor's badge is created from said control panel and deposited for collection on said web server.

According to a first aspect of the present invention, there is provided a telecommunications system adapted to act as a platform for electronic meetings, comprises a visitor's computer, an administration computer, an application computer, a firewall protecting said application computer and a transmission path over the Internet, communications between said visitor's computer and said application computer being mediated by an electronic badge generated by said administration computer and operating on said visitor's computer. The administration computer includes a control panel linked to a web server adapted to issue electronic badges. Access to said web server is controlled by a password protection means, and an electronic visitor's badge is created from said control panel and deposited for collection on said web server.

Said administration computer and application computer may be realized on a single data processing machine.

Alternatively, said administration computer and application computer may be distinct data processing machines, and communications between said visitor's computer and said application computer may be controlled by a firewall located in said administration computer.

Said administration computer may be protected by a firewall.

Said electronic badge may be an applet containing data identifying a visitor, a password, and a list of access rights relating to software applications running on said application computer.

Said list of access rights may permit access to one, or more, software applications.

Said applet may be adapted to run on said visitor's computer and cause one, or more, icons to be displayed on a VDU associated with said visitor's computer.

Said administration computer may include a control server linked to said control panel and said web server, and a database of access rules linked to said control server.

Said control server may be linked to a firewall protecting said application computer, and said database of access rules may be linked to said firewall protecting said application computer.

Said visitor's computer may download said electronic visitor's badge by accessing said web server and giving a password and visitor identification.

Access rights associated with said visitor's badge may be altered while said visitor computer is connected to said application computer.

Said visitors badge may be adapted to self destruct on receipt of a signal from said control server.

According to a second aspect to the present invention, there is provided a method of establishing access for a visitor's computer to an application computer protected by a firewall generated by an administration computer, over the Internet, wherein communications between said visitor's computer and said application computer are mediated with an electronic badge generated on said administration computer and operating on said visitor's computer. The method may include the steps of:
- issuing electronic badges by a web server linked to a control panel included in said administration computer;
- establishing a voice link over the PSTN between a person operating said visitor's computer, herein referred to as a visitor, and a person operating said administration computer, herein referred to as a host;
- said host establishing clearance for said visitor to access said application computer, and
- assigning and communicating a password to said visitor over said voice link.

Initial contact between a visitor and the host, i.e. an individual responsible for operation of the host computer, is thus established via a telephone conversation over the PSTN. Visitor and host agree on a password, or code word. The code is added, possibly in encrypted form, to the source code of an electronic badge. The electronic badge may be a Java applet which is compiled and placed on a web server protected by the password. When this "applet" is run via port 80, i.e. the port used for communication through a firewall, the code in the control server is correlated to the code presented by the badge, in other words, it does not matter that the firewall between visitor and host has changed the IP address.

The present invention can thus be used in any situation where individuals wish to work on a common computer and it is not possible to exchange hardware, but the individuals are able to recognize each other's voices. The invention facilitates secure control of access to a secure computer facility via exchange of identity badges over the internet.

The present invention strengthens the link between three security elements:
- voice recognition;
- knowledge of a password; and
- possession of an electronic badge - i.e. an applet
and manages a Uanslating/masking firewall, via port 80.

Said administration computer and said application computer may be realized on a single data processing machine.

Said administration computer and application computer may be realized as distinct data processing machines, and communications between said visitor's computer and said application computer may be controlled through a firewall located in said administration computer.

Said administration computer may be protected with a firewall.

Said electronic badge may be an applet containing data identifying a visitor, a password, and a list of access rights relating to software applications running on said application computer.

Said list of access rights may permit access to one, or more, software applications.

Said applet may run on said visitor's computer and cause one, or more, icons to be displayed on a VDU associated with said visitor's computer.

Said administration computer may include a control server linked to said control panel and said web server, and a database of access rules linked to said control server.

Said control server may be linked to a firewall protecting said application computer, and said database of access rules may be linked to said firewall protecting said application computer.

Access to said web server may be controlled by a password protection means.

Said host may create an electronic visitor's badge by actuation of said control panel and depositing said electronic visitor's badge, for collection by said visitor, on said web server.

Said visitor may access said web server over the internet, giving said password, and downloading said electronic visitor's badge.

Said method may include the steps of:
- said visitor requesting access, while connected to said application computer, to a first software application, not pre-authorised on said electronic visitor's badge;
- said control panel giving an alarm condition;
- said host confirming over said voice link that said visitor has requested access to said first software application; and
- modifying the access rights associated with said electronic visitor's badge via said control panel.

Said visitor's badge may self destruct on receipt of a signal from said control server.

According to a third aspect of the present invention, there is provided an administration computer for use with a telecommunications system adapted to act as a platform for electronic meetings, said administration computer having a firewall protecting an application computer, wherein said administration computer being adapted to create an electronic badge to mediate communications between a visitor's computer and said application computer. Said administration computer includes a control panel linked to a web server adapted to issue electronic badges. An electronic visitor's badge is created from said control panel and deposited for collection on said web server, and access to said web server is controlled by a password protection means.

Said administration computer and application computer may be realised on a single data processing machine.

Said administration computer and application computer may be distinct data processing machines.

Said administration computer may be protected by a firewall.

Said electronic badge may be an applet containing data identifying a visitor, a password, and a list of access rights relating to software applications running on said application computer.

Said list of access rights may permit access to one, or more, software applications.

Said applet may be adapted to run on said visitor's computer and cause one, or more, icons to be displayed on a VDU associated with said visitor's computer.

Said administration computer may include a control server linked to said control panel and said web server, and a database of access rules linked to said control server.

Said control server may be linked to a firewall protecting said application computer, and said database of access rules may be linked to said firewall protecting said application computer.

Access rights associated with said visitor's badge may be altered while a visitor's computer is connected to said application computer.

Embodiments of the invention will now be described, by way of example, with reference to the accompanying drawings, in which:

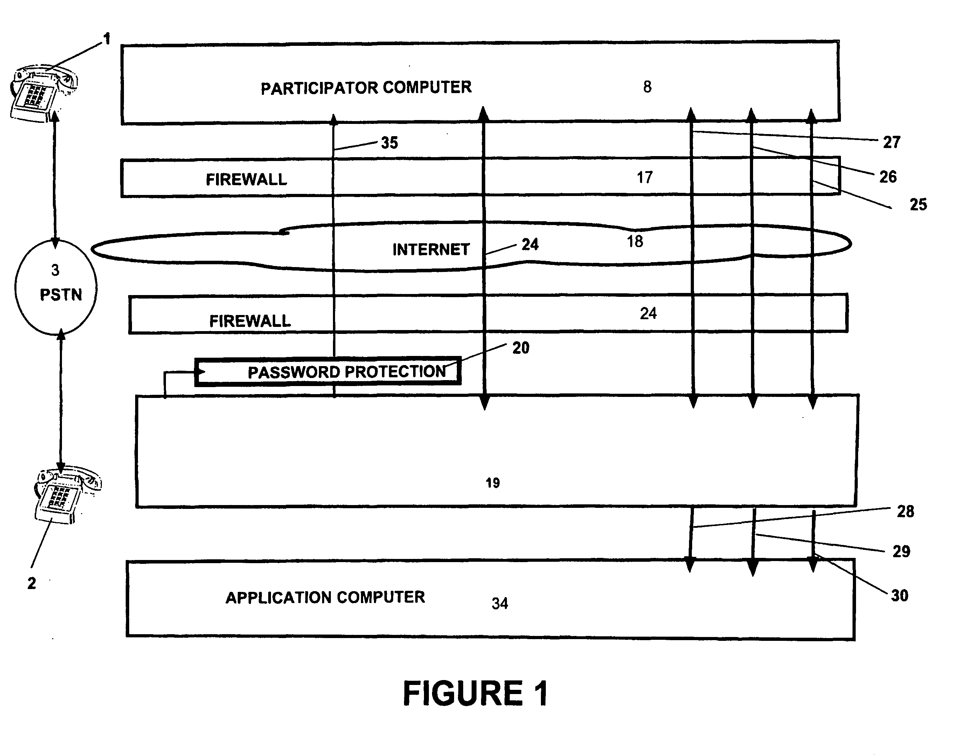

Figure 1 illustrates, in schematic form, an overview of a telecommunications system, according to the present invention.

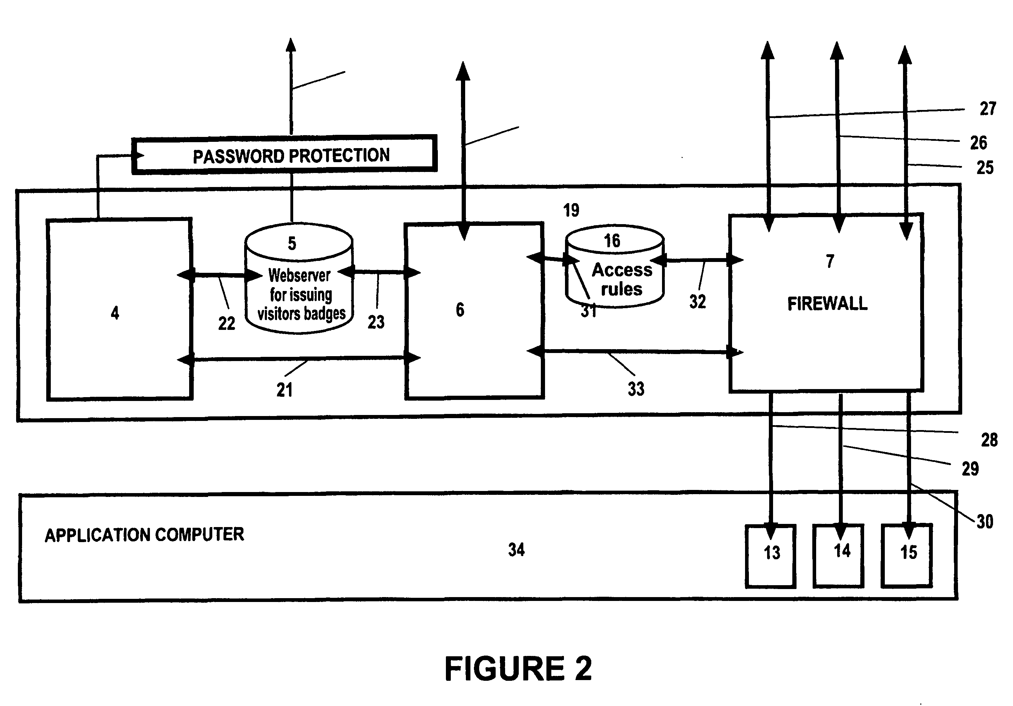

Figure 2 illustrates, in greater detail, the administration computer and application computer of Figure 1.

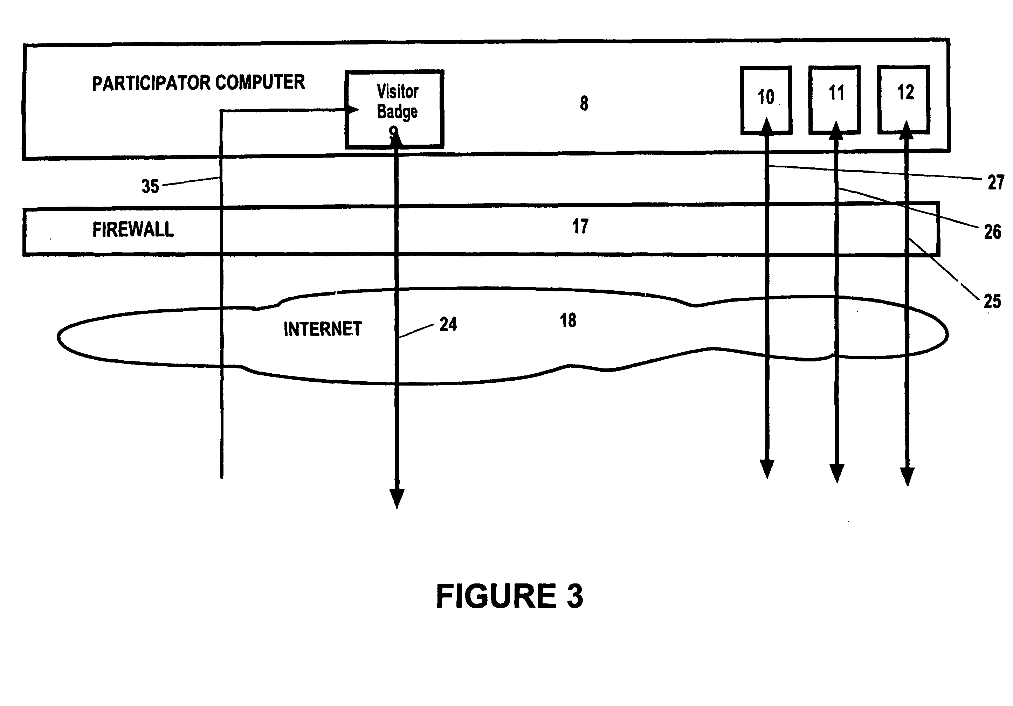

Figure 3 illustrates, in greater detail, the participator computer of Figure 1.

The system of the present invention may include seven main components, namely:
- a control server, 6, see the accompanying drawings;
- a control panel, 4;
- a visitor's badge, in the form of an applet, 9;
- firewalls, 17, 24 and 7;
- a web server, 5;
- a PSTN telephone link, 1, 2 and 3; and
- applications software, 13, 14 and 15.

As illustrated in the accompanying drawings, a telecommunications system which supports secure communication between a visitor's, or participator's, computer, 8, and application, or host computer, 34, has an administration computer 19. The participator computer, 8, is linked via a firewall, 17, to the Internet, 18, and thence through firewall, 24, to the administration computer, 19. The administration computer, 19, includes a web server, 5, for issuing visitor's badges in the form of Java applets, and is protected by a password recognition unit, 20. The administration computer includes a control panel, 4, which may take the form of a visual screen based interface, allowing an operator to control the administration computer and the issue of electronic badges. Each badge is in the form of an applet which, when run on a visitor's computer, such as 8, includes a series of icons for a range of applications on the application computer, to which the visitor is given access rights by the electronic badge. In the case of the embodiment illustrated in the drawings, these applications include applications 13, 14, and 15 which might be MS-Netmeeting, Word 6, and Coral Draw 6.

The administration computer also includes a control server, 6, which controls a server, 16, carrying the access rules for the application computer, 34, and the firewall, 7, which protects the application computer. Access to the individual applications packages 13, 14, and 15, is controlled individually via the firewall, so that access may be granted to one, two, or all of applications 13 to 15, depending on the access rights granted to a given electronic visitor's badge. Access rights associated with an electronic badge may be altered during the course of a meeting, or conference, via the control panel and control server, giving true dynamic control.

In operation, a visitor and host speak to each other over the telephone link 1,3,2. They agree a password and the access rights the visitor will have. The host may identify the visitor by his/her voice, or by exchange of personal information, a PIN number, or the like. Once identification has been established to the satisfaction of the host, a password is issued orally to the visitor. The host then set ups an electronic visitor's badge for the host on the webserver 5, including the agreed password and the agreed access rights for the visitor. The electronic visitor's badge now resides on webserver 5 and awaits collection by the visitor.

The visitor can now set up a data link over the Internet to control server, 6 on a channel 24. It should be noted that the different communications channels 24, 35, 27,26 and 25 are labelled for easy identification in the drawings and may, in fact, represent a single communications link. The visitor is then requested to give her/his password, which is authenticated by the password protection unit 20, which, in tum, permits the electronic badge to be transmitted to the visitor's computer. On receipt by the visitor's computer, the electronic password, which as previously stated is a Java applet, runs on the visitor's computer. The electronic badge causes a number of icons to be displayed on the visitor's computer, 10, 11, and 12. By actuating the running on the application computer 34. The firewall operates to control the applications and data files to which the visitor can obtain access in accordance with the password instructions encoded in the electronic visitor's badge and the access rules held on server 16, all of which can be controlled via the control server 6, and control panel 4.

Although, as illustrated in the drawings, the administration computer, 19, and the application computer, 34, may be distinct data processing machines, it is also possible to realise both computers on a single data processing machine.

Consider the following scenario.

Two persons, a visitor and host, agree to hold a meeting over internet. The host has, at his disposal, a computer system called the Control Lab Room System, and is prepared to host the meeting on this computer. On the telephone, the host and the visitor agree on the name and password for a visitor's badge which will then be created. The host sits by the control panel of the Control Lab Room System and creates this visitor's badge, and at this stage connects certain privileges to the badge. For example, the visitor will be allowed, on showing his/her badge, the right to use the MS-Netmeeting software available on the application computer. The visitor's badge is lodged on the webserver which belongs to the system. The visitor then draws and activates the badge via a special website, the reception. The name and password to get access to the badge are those which the host and the visitor have agreed on the telephone. The host will see when the badge has been activated, via the control panel and, if the host gives a receipt for the activation, the conference will commence. The visitor's badge has control codes which enable the visitor to request access to a range of functions available on the application computer, e.g. video, or a protected webserver. The host and the visitor start by using MS_Netmeeting. Since the host created the visitor's badge with rights for this equipment, it will start without any fresh intervention via the control panel.

After a while, however, the visitor wants to establish a connection with a video camera which shows the host's conference room. Before he/she has - 11 - happens, the control panel displays an alarm message, which shows that a visitor is trying to use a function for which the visitor has not been granted access rights. The host now asks the visitor, via the telephone link, if the attempt emanated from the visitor and, on receipt of a positive response, allocates, via a simple button press, the visitor with the right to establish the connection.

Now, suppose a hacker, called Charlie, tries to get access to the same video channel. Earlier in the week Charlie had intercepted IP-traffic which contained a visitor's badge. However, when he tried to use the badge, the host immediately identified the badge as time expired, and immediately excluded him from the conference. This time Charlie tries to steal the visitor's video flow. He is stopped once again, this time because the control server of the Control Lab Room System does not succeed in communicating with the visitor's badge which all authorized visitors must have. This causes a new alarm to be given. If the visitor, via the telephone, does not affirm that he has just opened a new client session, and the host is not satisfied that this second session also belongs to the visitor, the host refuses connection. Furthermore, the host will ignore all inquiries from that source for the remainder of the conference. The rest of the conference turns out well and, at the end of the conference, the host withdraws the visitor's badge by means of the control server, via its channel to the badge, issuing an instruction to the badge to self destruct.

In slightly more technical detail the course of events can be explained as follows.

The firewall informs the control server of an attempt to establish a connection which, based on pre-existing rules, the status of the visitor's badge and user control from the control panel, accepts, or denies, the connection, by creating a rule for the firewall to follow for this and similar connection attempts.

The visitor's badge is the critical point. Because it is an applet, it must be shown in a webreader on the visitor's screen in order to execute. If it is clicked away, it stops executing, and with that ceases to be valid. The source code of the which it is valid. It must show this information to make the control server accept a connection from it and, implicitly, from the location from which a person attempts to access the application computer.

The control server is the hub of the system. The control server creates the visitor's badge in accordance with instructions received from the control panel and places the visitor's badge on the webserver as described above. When the badge has been drawn from the webserver, it establishes contact with the control server. If the badge is still active, all manipulations the host performs with the badge on the control panel are reflected on the badge at the visitor's computer, and vice verse. The control server also controls the firewall, which provides the security for the conference.

The firewall has a number of rules to follow, like all firewalls. The difference here is that the host can dynamically change these rules, based on:
- judgment of the telephone part of the conference; and
- the guarantee the visitor's badge gives about the identity of the person operating the computer connected through, or seeking connection through, the firewall.

The control panel gives the host a view of the whole system. All badges which have been distributed can be seen here, together with the functions that are active. All events which the host can influence in the system are shown on the control panel via the same interface as the visitor has, i.e. the badge.

## Claims

1. A telecommunications system adapted to act as a platform for electronic meetings, comprising a visitor's computer (8), an administration computer (19), an application computer (34), a firewall (17) protecting said application computer and a transmission path over the Internet (18), communications between said visitor's computer and said application computer being mediated by an electronic badge generated by said administration computer and operating on said visitor's computer, **characterised in that** said administration computer (19) includes a control panel (4) linked to a web server (5) adapted to issue electronic badges, **in that** an electronic visitor's badge is created from said control panel and deposited for collection on said web server, and **in that** access to said web server is controlled by a password protection means.

2. A telecommunications system as claimed in claim 1, **characterised in that** said administration computer (19) and said application computer (34) are realised on a single data processing machine.

3. A telecommunications system as claimed in claim 1, **characterised in that** said administration computer (19) and said application computer (34) are separate data processing machines, and **in that** communications between said visitor's computer (8) and said application computer (34) are controlled by a firewall (7) located in said administration computer (19).

4. A telecommunications system as claimed in any of the previous claims, **characterised in that** said administration computer (19) is protected by a firewall (17).

5. A telecommunications system as claimed in any of the previous claims, **characterised in that** said electronic badge is an applet containing data identifying a visitor, a password, and a list of access rights relating to software applications running on said application computer (34).

6. A telecommunications system as claimed in claim 5, **characterised in that** said list of access rights may permit access to one, or more, software applications.

7. A telecommunications system as claimed in either claim 5, or 6, **characterised in that** said applet is adapted to run on said visitor's computer (8) and cause one, or more, icons to be displayed on a VDU associated with said visitor's computer.

8. A telecommunications system as claimed in claim 1, **characterised in that** said administration computer (19) includes a control server (6) linked to said control panel (4) and said web server (5), and a database (16) of access rules linked to said control server (6).

9. A telecommunications system as claimed in claim 8, **characterised in that** control server (6) is linked to a firewall (7) protecting said application computer (34), and **in that** said database of access rules (16) is linked to said firewall protecting said application computer.

10. A telecommunications system as claimed in claims 8 or 9, **characterised in that** said visitor's computer (8) is adapted to download said electronic visitor's badge by accessing said web server (5) and giving a password and visitor identification.

11. A telecommunications system as claimed in any of claims 8 to 10, **characterised in that** access rights associated with said visitor's badge can be altered while said visitor's computer (8) is connected to said administration computer (34).

12. A telecommunications system as claimed in any of claims 8 to 11, **characterised in that** said visitor's badge is adapted to self destruct on receipt of a signal from said control server (6).

13. A method of establishing access for a visitor's computer (8) to an application computer (34) protected by a firewall (7) generated by an administration computer (19), over the Internet (18), wherein communications between said visitor's computer and said application computer are mediated with an electronic badge generated on said administration computer and operating on said visitor's computer, **characterised by** the steps of:
- issuing electronic badges by a web server (5) linked to a central panel (4) included in said administration computer (19);
- establishing a voice link over the PSTN between a person operating said visitor's computer (8), herein referred to as a visitor, and a person operating said administration computer (19), herein referred to as a host;
- said host establishing clearance for said visitor to access said application computer (34), and
- assigning and communicating a password to said visitor over said voice link.

14. A method as claimed in claim 13, **characterised by** realising said administration computer (19) and said application computer (34) on a single data processing machine.

15. A method as claimed in claim 13, **characterised by** realising said administration computer (19) and said application computer (34) as separate data processing machines, and by controlling communications between said visitor's computer (8) and said application computer through a firewall (7) located in said administration computer.

16. A method as claimed in any of claims 13 to 15, **characterised by** protecting said administration computer (19) with a firewall (17).

17. A method as claimed in any of claims 13 to 16, **characterised by** said electronic badge being an applet containing data identifying a visitor, a password and a list of access rights relating to software applications running on said application computer (34).

18. A method as claimed in claim 17, **characterised by** said list of access rights permitting access to one, or more, software applications.

19. A method as claimed in either claim 17 or 18, **characterised by** said applet running on said visitor's computer (8) and causing one, or more, icons to be displayed on a VDU associated with said visitor's computer.

20. A method as claimed in claim 13, **characterised by** said administration computer (19) including a control server (6) linked to said control panel (4) and said web server (5) and a database (16) of access rules linked to said control server (6).

21. A method as claimed in claim 20, **characterised by** said control server (6) being linked to a firewall (7) protecting said application computer (34), and by said database (16) of access rules being linked to said firewall (7) protecting said application computer (34).

22. A method as claimed in claim 21, **characterised by** controlling access to said web server (5) with a password protection means.

23. A method as claimed in claim 13, **characterised by** said host creating an electronic visitor's badge by actuation of said control panel (4) and depositing said electronic visitor's badge, for collection by said visitor, on said web server (5).

24. A method as claimed in claims 22 and 23, **characterised by** said visitor accessing said web server (5) over the internet (18), giving said password, and downloading said electronic visitor's badge.

25. A method, as claimed in any of claims 13 - 24, **characterised by** the steps of:
- said visitor requesting access, while connected to said application computer (34), to a first software application, not pre-authorised on said electronic visitor's badge;
- said control panel (4) giving an alarm condition;
- said host confirming over said voice link that said visitor has requested access to said first software application; and
- modifying the access rights associated with said electronic visitor's badge via said control panel (4).

26. A method as claimed in any of claims 20 to 25, **characterised by** said visitor's badge self destructing on receipt of a signal from said control server (6).

27. An administration computer for use with a telecommunications system adapted to act as a platform for electronic meetings, said administration computer having a firewall (7) protecting an application computer (34), wherein said administration computer being adapted to create an electronic badge to mediate communications between a visitor's computer (8) and said application computer (34), **characterised in that** said administration computer (19) includes a control panel (4) linked to a web server (5) adapted to issue electronic badges, **in that** an electronic visitor's badge is created from said control panel and deposited for collection on said web server, and **in that** access to said web server is controlled by a password protection means.

28. An administration computer as claimed in claim 27, **characterised in that** said administration computer (19) and application computer (34) are realised on a single data processing machine.

29. An administration computer as claimed in claim 27, **characterised in that** said administration computer (19) and application computer (34) are separate data processing machines.

30. An administration computer as claimed in any of claims 27 to 29, **characterised in that** said administration computer is protected by a firewall (17).

31. An administration computer as claimed in any of claims 27 to 30, **characterised in that** said electronic badge is an applet containing data identifying a visitor, a password, and a list of access rights relating to software applications running on said application computer (34).

32. An administration computer as claimed in claim 31, **characterised in that** said list of access rights permits access to one, or more, software applications.

33. An administration computer as claimed in either claim 31 or 32, **characterised in that** said applet is adapted to run on said visitor's computer (8) and cause one, or more, icons to be displayed on a VDU associated with said visitor's computer.

34. An administration computer as claimed in claim 27, **characterised in that** said administration computer includes a control server (6) linked to said control panel (4) and said web server (5), and a database (16) of access rules linked to said control server (6).

35. An administration computer as claimed in claim 34, **characterised in that** said control server (6) is linked to a firewall (7) protecting said application computer (34), and **in that** said database (16) of access rules is linked to said firewall protecting said application computer.

36. An administration computer as claimed in any of claims 31 to 35, **characterised in that** access rights associated with said visitor's badge can be altered shile a visitor's computer (8) is connected to said application computer.

## Patentansprüche

1. Telekommunikationssystem, das dazu ausgebildet ist, als Plattform für elektronische Konferenzen zu wirken, das einen Besuchercomputer (8), einen Verwaltungscomputer (19), einen Anwendungscomputer (34), eine Firewall (17) aufweist, die den Anwendungscomputer und einen Übertragungsweg über das Internet (18) schützt, wobei Kommunikationen zwischen dem Besuchercomputer und dem Anwendungscomputer durch einen elektronischen Ausweis vermittelt werden, der durch den Verwaltungscomputer erzeugt wird und auf dem Besuchercomputer tätig ist, **dadurch gekennzeichnet, dass** der Verwaltungscomputer (19) eine Steuertafel (4) einschließt, die mit einem Webserver (5) verbunden ist, der dazu ausgebildet ist, elektronische Ausweise auszustellen, dass ein elektronischer Besucherausweis von der Steuertafel erzeugt wird und für Abholung auf dem Webserver deponiert wird, und dass Zugang zu dem Webserver durch ein Passwortschutzmittel kontrolliert wird.

2. Telekommunikationssystem nach Anspruch 1, **dadurch gekennzeichnet, dass** der Verwaltungscomputer (19) und der Anwendungscomputer (34) auf einer einzigen Datenverarbeitungsmaschine realisiert sind.

3. Telekommunikationssystem nach Anspruch 1, **dadurch gekennzeichnet, dass** der Verwaltungscomputer (19) und der Anwendungscomputer (34) getrennte Datenverarbeitungsmaschinen sind, und dass Kommunikationen zwischen dem Besuchercomputer (8) und dem Anwendungscomputer (34) durch eine Firewall (7) kontrolliert werden, die in dem Verwaltungscomputer (19) angeordnet ist.

4. Telekommunikationssystem nach einem der vorangehenden Ansprüche, **dadurch gekennzeichnet, dass** der Verwaltungscomputer (19) durch eine Firewall (17) geschützt ist.

5. Telekommunikationssystem nach einem der vorangehenden Ansprüche, **dadurch gekennzeichnet, dass** der elektronische Ausweis ein Applet ist, das einen Besucher identifizierende Daten, ein Passwort und eine Liste von Zugangsrechten enthält, die sich auf Softwareanwendungen beziehen, die auf dem Anwendungscomputer (34) laufen.

6. Telekommunikationssystem nach Anspruch 5, **dadurch gekennzeichnet, dass** die Liste von Zugangsrechten Zugang zu einer oder mehreren Softwareanwendungen erlauben kann.

7. Telekommunikationssystem nach entweder Anspruch 5 oder 6, **dadurch gekennzeichnet, dass** das Applet dazu ausgebildet ist, auf dem Besuchercomputer (8) zu laufen und zu bewirken, dass ein oder mehrere Icons (Symbole) auf einer VDU (Datensichtgerät) angezeigt wird/werden, die dem Besuchercomputer zugeordnet ist.

8. Telekommunikationssystem nach Anspruch 1, **dadurch gekennzeichnet, dass** der Verwaltungscomputer (19) einen Steuerserver (6), der mit der Steuertafel (4) und dem Webserver (5) verbunden ist, und eine Datenbank (16) von Zugangsregeln einschließt, die mit dem Steuerserver (6) verknüpft sind.

9. Telekommunikationssystem nach Anspruch 8, **dadurch gekennzeichnet, dass** der Steuerserver (6) mit einer Firewall (7) verbunden ist, die den Anwendungscomputer (34) schützt, und dass die Datenbank von Zugangsregeln (16) mit der Firewall verbunden ist, die den Anwendungscomputer schützt.

10. Telekommunikationssystem nach Anspruch 8 oder 9, **dadurch gekennzeichnet, dass** der Besuchercomputer (8) dazu ausgebildet ist, den elektronischen Besucherausweis herunterzuladen, indem er Zugriff auf den Webserver (5) nimmt und ein Passwort und eine Besucheridentifizierung gibt.

11. Telekommunikationssystem nach einem der Ansprüche 8 bis 10, **dadurch gekennzeichnet, dass** Zugangsrechte, die mit dem Besucherausweis verknüpft sind, geändert werden können, während der Besuchercomputer (8) mit dem Verwaltungscomputer (34) verbunden ist.

12. Telekommunikationssystem nach einem der Ansprüche 8 bis 11, **dadurch gekennzeichnet, dass** der Besucherausweis dazu ausgebildet ist, sich bei Empfang eines Signals vom Steuerserver (6) selbst zu zerstören.

13. Verfahren zum Einrichten von Zugang für einen Besuchercomputer (8) zu einem Anwendungscomputer (34), der durch eine Firewall (7) geschützt ist, die durch einen Verwaltungscomputer (19) erzeugt wird, über das Internet (18), wobei Kommunikationen zwischen dem Besuchercomputer und dem Anwendungscomputer mit einem elektronischen Ausweis vermittelt werden, der auf dem Verwaltungscomputer erzeugt wird und auf dem Besuchercomputer tätig wird, **gekennzeichnet durch** die Schritte:
- elektronische Ausweise **durch** einen Webserver (5) auszustellen, der mit einer zentralen Tafel (4) verbunden ist, die in dem Verwaltungscomputer (19) enthalten ist;
- eine Sprachverbindung über das PSTN (öffentliches Telefonnetz) zwischen einer Person, die dem Besuchercomputer (8) bedient, im folgenden als Besucher bezeichnet, und einer Person herzustellen, die den Verwaltungscomputer (19) bedient, im folgenden als Host bezeichnet;
- wobei der Host Berechtigung für den Besucher einrichtet, auf den Anwendungscomputer (34) zuzugreifen; und
- ein Passwort dem Besucher über die Sprachverbindung zuzuordnen und mitzuteilen.

14. Verfahren nach Anspruch 13, **gekennzeichnet durch** Realisieren des Verwaltungscomputers (19) und des Anwendungscomputers (34) auf einer einzigen Datenverarbeitungsmaschine.

15. Verfahren nach Anspruch 13, **gekennzeichnet durch** Realisieren des Verwaltungscomputers (19) und des Anwendungscomputers (34) als getrennte Datenverarbeitungsmaschinen und **durch** Steuern von Kommunikationen zwischen dem Besuchercomputer (8) und dem Anwendungscomputer **durch** eine Firewall (7), die in dem Verwaltungscomputer angeordnet ist.

16. Verfahren nach einem der Ansprüche 13 bis 15, **gekennzeichnet durch** Schützen des Verwaltungscomputers (19) mit einer Firewall (17).

17. Verfahren nach einem der Ansprüche 13 bis 16, **dadurch gekennzeichnet, dass** der elektronische Ausweis ein Applet ist, das einen Besucher identifizierende Daten, ein Passwort und eine Liste von Zugangsrechten enthält, die sich auf Softwareanwendungen beziehen, die auf dem Anwendungscomputer (34) laufen.

18. Verfahren nach Anspruch 17, **dadurch gekennzeichnet, dass** die Liste von Zugangsrechten Zugang zu einer oder mehreren Softwareanwendungen erlaubt.

19. Verfahren nach entweder Anspruch 17 oder 18, **dadurch gekennzeichnet, dass** das Applet auf dem Besuchercomputer (8) läuft und bewirkt, dass ein oder mehrere Icons auf einer VDU angezeigt wird/werden, die dem Besuchercomputer zugeordnet ist.

20. Verfahren nach Anspruch 13, **dadurch gekennzeichnet, dass** der Verwaltungscomputer (19) einen Steuerserver (6), der mit der Steuertafel (4) und dem Webserver (5) verbunden ist, und eine Datenbank (16)) von Zugangsregeln einschließt, die mit dem Steuerserver (6) verknüpft sind.

21. Verfahren nach Anspruch 20, **dadurch gekennzeichnet, dass** der Steuerserver (6) mit einer Firewall (7) verbunden ist, die den Anwendungscomputer (34) schützt, und **dadurch**, dass die Datenbank (16) von Zugangsregeln mit der Firewall (7) verbunden ist, die den Anwendungscomputer (34) schützt.

22. Verfahren nach Anspruch 21, **dadurch gekennzeichnet, dass** Zugang zu dem Webserver (5) mit einem Passwortschutzmittel kontrolliert wird.

23. Verfahren nach Anspruch 13, **dadurch gekennzeichnet, dass** der Host einen elektronischen Besucherausweis durch Betätigung der Steuertafel (4) erzeugt und den elektronischen Besucherausweis für Abholung durch den Besucher auf dem Webserver (5) deponiert.

24. Verfahren nach Anspruch 22 und 23, **dadurch gekennzeichnet, dass** der Besucher auf den Webserver (5) über das Internet (18) zugreift, das Passwort gibt und den elektronischen Besucherausweis herunterlädt.

25. Verfahren nach einem der Ansprüche 13 bis 24, **gekennzeichnet durch** die Schritte:
- dass der Besucher Zugang, während er mit dem Anwendungscomputer (34) verbunden ist, zu einer ersten Softwareanwendung anfordert, die auf dem elektronischen Besucherausweis nicht vorher autorisiert ist;
- dass die Steuertafel (4) einen Alarmzustand gibt;
- dass der Host über die Sprachverbindung bestätigt, dass der Besucher Zugang zu der ersten Softwareanwendung angefordert hat; und
- dass die Zugangsrechte, die mit dem elektronischen Besucherausweis verknüpft sind, über die Steuertafel (4) abgewandelt werden.

26. Verfahren nach einem der Ansprüche 20 bis 25, **dadurch gekennzeichnet, dass** sich der Besucherausweis bei Empfang eines Signals vom Steuerserver (6) selbst zerstört.

27. Verwaltungscomputer für Verwendung mit einem Telekommunikationssystem, das dazu ausgebildet ist, als Plattform für elektronische Konferenzen zu wirken, welcher Verwaltungscomputer eine Firewall (7) hat, die einen Anwendungscomputer (34) schützt, wobei der Verwaltungscomputer dazu ausgebildet ist, einen elektronischen Ausweis zu schaffen, um Kommunikationen zwischen einem Besuchercomputer (8) und dem Anwendungscomputer (34) zu vermitteln, **dadurch gekennzeichnet, dass** der Verwaltungscomputer (19) eine Steuertafel (4) einschließt, die mit einem Webserver (5) verbunden ist, der dazu ausgebildet ist, elektronische Ausweise auszustellen, dass ein elektronischer Besucherausweis von der Steuertafel erzeugt wird und für Abholung auf dem Webserver deponiert wird, und dass Zugang zu dem Server durch ein Passwortschutzmittel kontrolliert wird.

28. Verwaltungscomputer nach Anspruch 27, **dadurch gekennzeichnet, dass** der Verwaltungscomputer (19) und der Anwendungscomputer (34) auf einer einzigen Datenverarbeitungsmaschine realisiert sind.

29. Verwaltungscomputer nach Anspruch 27, **dadurch gekennzeichnet, dass** der Verwaltungscomputer (19) und der Anwendungscomputer (34) getrennte Datenverarbeitungsmaschinen sind.

30. Verwaltungscomputer nach einem der Ansprüche 27 bis 29, **dadurch gekennzeichnet, dass** der Verwaltungscomputer durch eine Firewall (17) geschützt ist.

31. Verwaltungscomputer nach einem der Ansprüche 27 bis 30, **dadurch gekennzeichnet, dass** der elektronische Ausweis ein Applet ist, das einen Besucher identifizierende Daten, ein Passwort und eine Liste von Zugangsrechten enthält, die sich auf Softwareanwendungen beziehen, die auf dem Anwendungscomputer (34) laufen.

32. Verwaltungscomputer nach Anspruch 31, **dadurch gekennzeichnet, dass** die Liste von Zugangsrechten Zugang zu einer oder mehreren Softwareanwendungen erlaubt.

33. Verwaltungscomputer nach entweder Anspruch 31 oder 32, **dadurch gekennzeichnet, dass** das Applet dazu ausgebildet ist, auf dem Besuchercomputer (8) zu laufen und zu bewirken, dass ein oder mehr Icons auf einer VDU angezeigt wird/werden, die dem Besuchercomputer zugeordnet ist.

34. Verwaltungscomputer nach Anspruch 27, **dadurch gekennzeichnet, dass** der Verwaltungscomputer einen Steuerserver (6), der mit der Steuertafel (4) und dem Webserver (5) verbunden ist, und eine Datenbank (16) von Zugangsregeln einschließt, die mit dem Steuerserver (6) verknüpft sind.

35. Verwaltungscomputer nach Anspruch 34, **dadurch gekennzeichnet, dass** der Steuerserver (6) mit einer Firewall (7) verbunden ist, die den Anwendungscomputer (34) schützt, und dass die Datenbank (16) von Zugangsregeln mit der Firewall verknüpft ist, die den Anwendungscomputer schützt.

36. Verwaltungscomputer nach einem der Ansprüche 31 bis 35, **dadurch gekennzeichnet, dass** Zugangsrechte, die mit dem Besucherausweis verknüpft sind, geändert werden können, während ein Besuchercomputer (8) mit dem Anwendungscomputer verbunden ist.

## Revendications

1. Système de télécommunication prévu pour servir de plate-forme pour des réunions électroniques, comprenant un ordinateur de participant (8), un ordinateur d'administration (19), un ordinateur d'application (34), un pare-feu (17) protégeant le dit ordinateur d'application, et un chemin de transmission sur le réseau Internet (18), les communications entre le dit ordinateur de participant et le dit ordinateur d'application étant permises par un badge électronique généré par le dit ordinateur d'administration et fonctionnant sur le dit ordinateur de participant, **caractérisé en ce que** le dit ordinateur d'administration (19) comprend un panneau de commande (4) relié à un serveur de réseau (5) prévu pour émettre des badges électroniques, **en ce qu'**un badge de participant électronique est créé à partir du dit panneau de commande et déposé pour collecte sur le dit serveur de réseau, et **en ce que** l'accès au dit serveur de réseau est commandé par un moyen de protection à mot de passe.

2. Système de télécommunication selon la revendication 1, **caractérise en ce que** le dit ordinateur d'administration (19) et le dit ordinateur d'application (34) sont réalisés sur un machine de traitement de données unique.

3. Système de télécommunication selon la revendication 1, **caractérisé en ce que** le dit ordinateur d'administration (19) et le dit ordinateur d'application (34) sont des machines de traitement de données séparées, et **en ce que** les communications entre le dit ordinateur de participant (8) et le dit ordinateur d'application (34) sont contrôlées par un pare-feu (7) placé dans le dit ordinateur d'administration (19).

4. Système de télécommunication selon une quelconque des revendications précédentes, **caractérisé en ce que** le dit ordinateur d'administration (19) est protégé par un pare-feu (17).

5. Système de télécommunication selon une quelconque des revendications précédentes, **caractérisé en ce que** le dit badge électronique est un applet contenant des données identifiant un participant, un mot de passe et une liste de droits d'accès relatifs à des applications de logiciel en exécution sur le dit ordinateur d'application (34).

6. Système de télécommunication selon la revendication 5, **caractérisé en ce que** la dite liste de droits d'accès peut permettre l'accès à une ou plusieurs applications de logiciel.

7. Système de télécommunication selon la revendication 5 ou 6, **caractérisé en ce que** le dit applet est prévu pour fonctionner sur le dit ordinateur de participant (8) et à provoquer l'affichage d'une ou plusieurs icônes sur un affichage associé au dit ordinateur de participant.

8. Système de télécommunication selon la revendication 1, **caractérisé en ce que** le dit ordinateur d'administration (19) comprend un serveur' de commande (6) relié au dit panneau de commande (4) et au dit serveur de réseau (5), et une base de données (16) de règles d'accès reliée au dit serveur de commande (6).

9. Système de télécommunication selon la revendication 8, **caractérisé en ce que** le serveur de commande (6) est relié à un pare-feu (7) protégeant le dit ordinateur d'application (34), et **en ce que** la dite base de données de règles d'accès (16) est reliée au dit pare-feu protégeant le dit ordinateur d'application.

10. Système de télécommunication selon la revendication 8 ou 9, **caractérisé en ce que** le dit ordinateur de participant (8) est prévu pour télécharger le dit badge électronique de participant par accès au dit serveur de réseau (5) et fourniture d'un mot de passe et d'une identification de participant.

11. Système de télécommunication selon une quelconque des revendications 8 à 10, **caractérisé en ce que** les droits d'accès associés au dit badge de participant peuvent être modifiés pendant que le dit ordinateur de participant (8) est connecté au dit ordinateur d'administration (34).

12. Système de télécommunication selon une quelconque des revendications 8 à 11, **caractérisé en ce que** le dit badge de participant est prévu pour s'auto-détruire lors de la réception d'un signal venant du dit serveur de commande (6).

13. Procédé d'établissement d'accès pour un ordinateur de participant (8) à un ordinateur d'application (34) protégé par un pare-feu (7) généré par un ordinateur d'administration (19), sur le réseau Internet (18), dans lequel les communications entre le dit ordinateur de participant et le dit ordinateur d'application se font par l'intermédiaire d'un badge électronique généré sur le dit ordinateur d'administration et fonctionnant sur le dit ordinateur de participant, **caractérisé par** les étapes de :
émission de badges électroniques par un serveur de réseau (5) relié à un panneau central (4) inclus dans le dit ordinateur d'administration (19) ;
établissement d'une liaison vocale sur le PSTN entre une personne utilisant le dit ordinateur de participant (8), appelée ici participant, et une personne utilisant le dit ordinateur d'administration (19) appelée ici hôte ;
le dit hôte établissant une autorisation pour l'accès du dit participant au dit ordinateur d'application (34), et
attribution et communication d'un mot de passe au dit participant sur la dite liaison vocale.

14. Procédé selon la revendication 13, **caractérisé par** la réalisation du dit ordinateur d'administration (19) et du dit ordinateur d'application (34) sur une machine de traitement de données unique.

15. Procédé selon la revendication 13, **caractérisé par** la réalisation du dit ordinateur d'administration (19) et du dit ordinateur d'application (34) comme des machines de traitement de données séparées, et par le contrôle des communications entre le dit ordinateur de participant (8) et le dit ordinateur d'application par l'intermédiaire d'un pare-feu (7) placé dans le dit ordinateur d'administration.

16. Procédé selon une quelconque des revendications 13 à 15, **caractérisé par** la protection du dit ordinateur d'administration (19) avec un pare-feu (17).

17. Procédé selon une quelconque des revendications 13 à 16, **caractérisé en ce que** le dit badge électronique est un applet contenant des données identifiant un participant, un mot de passe et une liste de droits d'accès relatifs aux applications de logiciel en exécution sur le dit ordinateur d'application (34).

18. Procédé selon la revendication 17, **caractérisé en ce que** la dite liste de droits d'accès permet l'accès à une ou plusieurs applications de logiciel.

19. Procédé selon la revendication 17 ou 18,
**caractérisé en ce que** le dit applet fonctionne sur le dit ordinateur de participant (8) et provoque l'affichage d'une ou plusieurs icônes sur un affichage associé au dit ordinateur de participant.

20. Procédé selon la revendication 13, **caractérisé en ce que** le dit ordinateur d'administration (19) comprend un serveur de commande (6) relié au dit panneau de commande (4) et au dit serveur de réseau (5), et une base de données (16) de règles d'accès reliée au dit serveur de commande (6).

21. Procédé selon la revendication 20, **caractérisé en ce que** le dit serveur de commande (6) est relié à un pare-feu (7) protégeant le dit ordinateur d'application (34), et **en ce que** la dite base de données (16) de règles d'accès est reliée au dit pare-feu (7) protégeant le dit ordinateur d'application (34).

22. Procédé selon la revendication 21, **caractérisé en ce que** l'accès au dit serveur de réseau (5) est contrôlé avec un moyen de protection à mot de passe.

23. Procédé selon la revendication 13, **caractérisé en ce que** le dit hôte crée un badge de participant électronique par actionnement du dit panneau de commande (4) et dépôt du dit badge de participant électronique, pour collecte par le dit participant, sur le dit serveur de réseau (5).

24. Procédé selon les revendications 22 et 23, **caractérisé en ce que** le dit participant accède au dit serveur de réseau (5) sur le réseau Internet (18), fournit le dit mot de passe et télécharge le dit badge de participant électronique.

25. Procédé selon une quelconque des revendications 13 à 24, **caractérisé par** les étapes suivantes :
le dit participant demande l'accès, pendant qu'il est connecté au dit ordinateur d'application (34), à une première application de logiciel, non pré-autorisée sur le dit badge de participant électronique ;
le dit panneau de commande (4) indique un état d'alarme ;
le dit hôte confirme sur la dite liaison vocale que le dit participant a demandé l'accès à la dite première application de logiciel ; et
les droits d'accès associés au dit badge de participant électronique sont modifiés via le dit panneau de commande (4).

26. Procédé selon une quelconque des revendications 20 à 25, **caractérisé en ce que** le dit badge de participant est auto-détruit lors de la réception d'un signal fourni par le dit serveur de commande (6).

27. Ordinateur d'administration utilisable avec un système de télécommunication prévu pour servir de plate-forme pour des réunions électroniques, le dit ordinateur d'administration ayant un pare-feu (7) protégeant un ordinateur d'application (34), dans lequel le dit ordinateur d'administration est prévu pour créer un badge électronique qui autorise des communications entre un ordinateur de participant (8) et le dit ordinateur d'application (34), **caractérisé en ce que** le dit ordinateur d'administration (19) comprend un panneau de commande (4) relié à un serveur de réseau (5) prévu pour émettre des badges électroniques, **en ce qu'**un badge de participant électronique est créé à partir du dit panneau de commande et déposé pour collecte sur le dit serveur de réseau, et **en ce que** l'accès au dit serveur de réseau est commandé par un moyen de protection à mot de passe.

28. Ordinateur d'administration selon la revendication 27, **caractérisé en ce que** le dit ordinateur d'administration (19) et le dit ordinateur d'application (34) sont réalisés sur une machine de traitement de données unique.

29. Ordinateur d'administration selon la revendication 27, **caractérisé en ce que** le dit ordinateur d'administration (19) et le dit ordinateur d'application (34) sont des machines de traitement de données séparées.

30. Ordinateur d'administration selon une quelconque des revendications 27 à 29, **caractérisé en ce que** le dit ordinateur d'administration est protégé par un pare-feu (17).

31. Ordinateur d'administration selon une quelconque des revendications 27 à 30, **caractérisé en ce que** le dit badge électronique est un applet contenant des données identifiant un participant, un mot de passe et une liste de droits d'accès relatifs aux applications de logiciel fonctionnant sur le dit ordinateur d'application (34).

32. Ordinateur d'administration selon la revendication 31, **caractérisé en ce que** la dite liste de droits d'accès permet d'accéder à une ou plusieurs applications de logiciel.

33. Ordinateur d'administration selon la revendication 31 ou 32, **caractérisé en ce que** le dit applet est prévu pour fonctionner sur le dit ordinateur de participant (8) et provoquer l'affichage d'une ou plusieurs icônes sur un affichage associé au dit ordinateur de participant.

34. Ordinateur d'administration selon la revendication 27, **caractérisé en ce que** le dit ordinateur d'administration comprend un serveur de commande (6) relié au dit panneau de commande (4) et au dit serveur de réseau (5), et une base de données (16) de règles d'accès reliée au dit serveur de commande (6).

35. Ordinateur d'administration selon la revendication 34, **caractérisé en ce que** le dit serveur de commande (6) est relié à un pare-feu (7) protégeant le dit ordinateur d'application (34), et **en ce que** la dite base de données (16) de règles d'accès est reliée au dit pare-feu protégeant le dit ordinateur d'application.

36. Ordinateur d'administration selon une quelconque des revendications 31 à 35, **caractérisé en ce que** les droits d'accès associés au dit badge de participant peuvent être modifiés pendant qu'un ordinateur de participant (8) est connecté au dit ordinateur d'application.
